# DEMANDE DE BREVET EUROPEEN

(11) **EP 1 669 280 A1**
(43) Date de publication de la demande: **14.06.2006**
(21) Numéro de dépôt: 05292653.2
(22) Date de dépôt: 13.12.2005
(51) Int. Cl.: B62D 25/12, B60S 1/04

(54) **Capot moteur d'un véhicule automobile comportant un auvant arrière intégré**

(30) Priorité: 13.12.2004 FR 0413229
(71) Demandeur: COMPAGNIE PLASTIC OMNIUM, 69007 Lyon (FR)
(72) Inventeur: Delavalle, Dominique, 01160 Pont d'Ain (FR); Roux, Jean-Pierre, 69480 Pommiers (FR); Rocheblave, Laurent, 69100 Villeurbanne (FR)
(74) Mandataire: Remy, Vincent Noel Paul

(57) **Abrégé**

L'invention concerne un capot (1) de véhicule automobile, comportant une peau extérieure (2) et une doublure de capot (3), qui est caractérisé en ce qu'il comporte, solidaire de la doublure de capot, un caisson arrière (4) destiné à se trouver à la base du pare-brise (5) du véhicule une fois le capot monté sur ledit véhicule.

## Description

La présente invention concerne un capot moteur d'un véhicule automobile, comportant un auvent arrière intégré.

On sait que le capot d'un véhicule est traditionnellement constitué par une peau extérieure, une doublure de renfort, des renforts locaux pour les zones charnières, une serrure, un crochet de sécurité, une béquille. Le matériau utilisé est l'acier ou l'aluminium, qui sont adaptés à des productions en grands volumes.

En partie arrière du capot, une zone d'auvent située à la base du pare-brise est composée de différents panneaux en acier. Cette zone d'auvent permet l'évacuation d'eau, et sert de guide d'air pour l'habitacle. Elle supporte en outre le système d'essuie-vitre, le réservoir de liquide de frein et le filtre à pollen.

Toutefois, la zone d'auvent n'étant pas une zone structurelle et participant très peu à la rigidité de la caisse, l'utilisation de tôles d'acier constitue un ajout de masse non nécessaire sur l'avant du véhicule, zone dans laquelle les constructeurs recherchent plutôt de l'allègement.

En outre, la zone d'auvent est une zone très blessante pour la tête d'un piéton.

De plus, les pièces constituant la zone d'auvent sont montées et soudées au ferrage et sont donc présentes dès la cataphorèse, empêchant alors un accès facile pour passer, par exemple, l'ensemble des faisceaux électriques et des gaines allant de l'habitacle vers le compartiment moteur.

L'invention a notamment pour but de remédier à ces inconvénients en intégrant la zone d'auvent dans le capot.

A cet effet, l'invention a pour objet un capot de véhicule automobile, comportant une peau extérieure et une doublure de capot, caractérisé en ce qu'il comporte, solidaire de la doublure de capot, un caisson arrière destiné à se trouver à la base du pare-brise du véhicule une fois le capot monté sur ledit véhicule.

Ainsi, l'intégration de la zone d'auvent dans le capot, par moulage d'un seul tenant avec la doublure du capot ou par assemblage à cette doublure, permet un allègement de la zone avant du véhicule.

De plus, grâce au capot selon l'invention, les pièces de la zone d'auvent ne sont plus montées lors du ferrage mais sont ajoutées au véhicule lors de l'étape de montage du capot. Ces pièces ne posent donc plus de problèmes pour le positionnement d'autres éléments, tels que les câbles.

L'intégration de ces pièces au capot permet également d'assouplir la zone d'auvent selon la direction verticale, pour la protection de la tête d'un piéton.

En outre, le capot selon l'invention n'entraîne aucun problème de corrosion.

Dans un mode de réalisation particulier, le caisson est dimensionné pour pouvoir recueillir les eaux de pluie, supporter le moteur des essuie-vitre, ainsi que des supports d'axes, éventuellement aptes à se rompre d'essuie-vitre.

Le capot comporte donc en partie arrière un caisson permettant de remplir de nombreuses fonctionnalités.

Le caisson est avantageusement dimensionné pour pouvoir également contenir un réservoir de liquide de frein et/ou un filtre à pollen.

Le caisson ainsi équipé peut être préparé en dehors de la chaîne principale de montage de véhicule, ce qui permet d'économiser des coûts de fabrication.

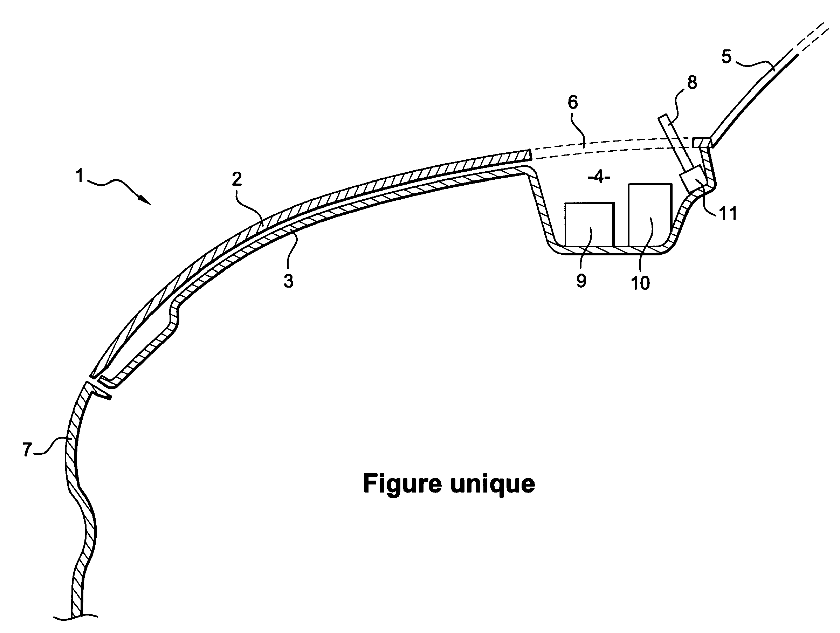

L'invention sera mieux comprise à la lecture de la description qui va suivre, donnée uniquement à titre d'exemple et faite en se référent à la figure unique, représentant une section longitudinale d'un capot selon l'invention.

On a représenté sur la figure un capot 1, qui est un capot fixe, c'est-à-dire qu'il ne s'ouvre que pour la maintenance.

Ce capot 1 comporte une peau extérieure 2 et une doublure de capot 3, la peau extérieure 2 étant en aluminium.

Ce capot comporte également un auvent 4, formant caisson arrière, solidaire de la doublure de capot 3, et destiné à se trouver à la base du pare-brise 5 du véhicule, une fois le capot monté sur ledit véhicule.

La doublure de capot 3 et l'auvent 4 sont réalisés d'un seul tenant par moulage.

L'auvent 4 est recouvert d'une grille 6, affleurant avec la peau de capot 2.

La peau de capot 2 affleure également avec une peau de pare-chocs 7, située à l'avant du véhicule.

L'auvent 4 est dimensionné pour pouvoir recueillir les eaux de pluie, et pour pouvoir supporter des supports d'axes moteur d'essuie-vitre 8 fusibles, c'est-à-dire éventuellement aptes à se rompre.

L'auvent 4 est également dimensionné pour pouvoir contenir un réservoir 9 de liquide frein et un filtre à pollen 10.

Il est également dimensionné pour supporter le moteur 11 des essuie-vitre.

On notera que l'invention n'est pas limitée au mode de réalisation précédemment décrit. Dans une variante non représentée, l'auvent 4 est par exemple assemblé à la doublure par collage.

## Revendications

1. Capot (1) de véhicule automobile, comportant une peau extérieure (2) et une doublure de capot (3), **caractérisé en ce qu'**il comporte, solidaire de la doublure de capot (3), un caisson arrière (4) destiné à se trouver à la base du pare-brise (5) du véhicule une fois le capot monté sur ledit véhicule.

2. Capot selon la revendication 1, dans lequel le caisson (4) est dimensionné pour pouvoir recueillir les eaux de pluie, supporter le moteur (11) des essuie-vitre, ainsi que des supports d'axes (10), éventuellement aptes à se rompre, d'essuie-vitre.

3. Capot selon l'une quelconque des revendications 1 et 2, dans lequel le caisson (4) est dimensionné pour pouvoir contenir un réservoir (9) de liquide de frein et/ou un filtre à pollen (10).
